# EUROPÄISCHE PATENTANMELDUNG

(11) **EP 4 052 567 A1**
(43) Veröffentlichungstag der Anmeldung: **07.09.2022**
(21) Anmeldenummer: 22159756.0
(22) Anmeldetag: 02.03.2022
(51) Int. Cl.: A01K 1/01

(54) **ANORDNUNG ZUM ABFÜHREN VON JAUCHE IN EINEM STALL, UND BAUSATZ**

(30) Priorität: 03.03.2021 DE 202021101058 U
(71) Anmelder: Funke Kunststoffe GmbH, 59071 Hamm-Uentrop (DE)
(72) Erfinder: FUNKE, Norbert, 48324 Sendenhorst (DE); FUNKE, Hans Günter, 48324 Sendenhorst (DE)
(74) Vertreter: Habbel, Ludwig

(57) **Zusammenfassung**

Bei einer Anordnung (1) zum Abführen von Jauche in einem Stall, mit einer im Stallboden (2) verlaufenden Rinne zur Aufnahme der Jauche, die eine vorbestimmte Fließrichtung (F) aufweist, so dass die Jauche zu einer vorbestimmten Stelle führbar ist, wobei die an die Rinne grenzende Stallbodenoberfläche ein Gefälle zur Rinne hin aufweist, schlägt die Erfindung vor, dass die Rinne eine Rohrleitung (3) mit mehreren in die Rohrleitung (3) eingesetzten Abzweigen (5) aufweist, wobei sich die Abzweige (5) von der Rohrleitung (3) aus nach oben erstrecken und mit ihrer jeweiligen Mündung (7), die einen Durchmesser von wenigstens 30 mm aufweist, jeweils eine Einlauföffnung der Rinne schaffen, die auf Höhe der Stallbodenoberfläche oder darunter angeordnet und dazu bestimmt ist, auf dem Stallboden (2) befindliche Flüssigkeit in die Rinne einströmen zu lassen. Weiterhin schlägt die Erfindung einen Bausatz zur Schaffung einer solchen Anordnung (1) vor, mit Rohrstücken (4), mehreren Abzweigen (5) und mit Abdeckkappen (14), die jeweils mit Durchbrüchen versehen und dazu bestimmt sind, die Mündungen (7) der Abzweige (5) für Flüssigkeit durchlässig zu verschließen.

## Beschreibung

Die Erfindung betrifft eine Anordnung zum Abführen von Jauche in einem Stall sowie einen Bausatz, der bei der Herstellung einer solchen Anordnung verwendbar ist.

Im Rahmen der vorliegenden Anmeldung wird zwischen Gülle und Jauche insofern unterschieden, als unter Gülle ein aus Kot und Urin bestehendes Gemisch der tierischen Ausscheidungen verstanden wird, während als Jauche die flüssigen Bestandteile der Gülle bezeichnet werden.

Es ist vorteilhaft, die Jauche möglichst schnell vom Stallboden abzuführen, so dass eine auf dem Stallboden befindliche Einstreu, beispielsweise Stroh, möglichst trocken gehalten werden kann, und so dass auch die Bildung von Ammoniak möglichst gering gehalten werden kann. Die Formulierung "Abführen von Jauche in einem Stall" betrifft daher den Aspekt, wie die Jauche innerhalb des Stalls geführt wird. Die zunächst vom Stallboden abgeführte Jauche kann anschließend innerhalb des Stalls gelagert oder aus dem Stall herausgeführt werden. Die Jauche wird in einer vorbestimmten Fließrichtung geführt, so dass sie zu einer vorbestimmten Stelle gelangt.

Es ist bekannt, Sammelrinnen zu verwenden. Durch einen entsprechend schrägen Verlauf des Stallbodens gelangt die Jauche in die Sammelrinnen. Gitterabdeckungen über den Sammelrinnen dienen dazu, den Eintrag von festen Bestandteilen der Gülle und auch der Einstreu in die Sammelrinnen möglichst zu verhindern. Die Sammelrinnen weisen eine vorgegebene Fließrichtung auf, so dass die in einer Sammelrinne befindliche Flüssigkeit zu einem Auslass der Sammelrinne strömt und beispielsweise in einen Sammeltank gelangt.

Der Erfindung liegt die Aufgabe zugrunde, eine gattungsgemäße Anordnung dahingehend zu verbessern, dass diese optimale Haltungsbedingungen für unterschiedliche Haltungsformen der Tiere in einem Stall sowie eine möglichst einfache Wartung der Anordnung ermöglicht. Weiterhin liegt der Erfindung die Aufgabe zugrunde, einen Bausatz anzugeben, der die Herstellung einer solchen Anordnung auf möglichst vorteilhafte Weise ermöglicht.

Diese Aufgabe wird erfindungsgemäß durch eine Anordnung nach Anspruch 1 und durch einen Bausatz nach Anspruch 7 gelöst. Vorteilhafte Ausgestaltungen sind in den Unteransprüchen beschrieben.

Die Erfindung schlägt vor, anstelle einer Sammelrinne, die auf ihrer gesamten Länge nach oben offen und lediglich durch ein als Trittschutz dienendes Gitter abgedeckt ist, eine Rohrleitung im Stallboden zu verwenden, wobei Abzweige in die Rohrleitung eingesetzt sind, die sich von der Rohrleitung aus nach oben erstrecken und mit ihrer Mündung jeweils eine Einlauföffnung schaffen, in welche die auf dem Stallboden befindliche Flüssigkeit einströmen kann. Die Rinne wird dementsprechend als Rohrleitung mit den mehreren Abzweigen gebildet, so dass durch die Einlauföffnungen die auf dem Stallboden befindliche Flüssigkeit wie z. B. Jauche in die Rinne einströmen kann. Die Mündungen weisen dabei jeweils einen Durchmesser von 30 mm oder mehr auf, so dass großflächige Öffnungen bereitgestellt werden, durch welche die Jauche in die Rinne gelangen kann. Bei der Größenangabe der Einlauföffnung in Form eines bestimmten Durchmessers geht der vorliegende Vorschlag davon aus, dass typischerweise sowohl die Rohrleitung als auch die Abzweige als auch die Einlauföffnungen jeweils einen kreisrunden Querschnitt aufweisen. Der kreisrunde Querschnitt ist insofern vorteilhaft, als er Engstellen, Ecken und ähnliche Stellen vermeidet, an denen Material sich anlagern, festsetzen und somit die Freigängigkeit der Rinne beeinträchtigen kann. Wenn abweichend davon eine andere Querschnittsgeometrie gewählt wird, dienen die Durchmesserangaben dazu, die Querschnittsfläche zu definieren, die ein kreisrunder Querschnitt aufweist, dessen Querschnittsfläche gleich groß ist wie die jeweils gewählte, vom Kreisrund abweichende andere Querschnittsform.

Auch bei der Wartung der Anordnung sind die großflächigen Mündungen vorteilhaft, denn sie erleichtern z.B. das Einbringen von Reinigungshilfsmitteln wie Bürsten, Schabern oder dergleichen, so dass die Freigängigkeit der Rohrleitung und der Abzweige auch dann zuverlässig sichergestellt und wiederhergestellt werden kann, falls ein erhöhter Reinigungsaufwand den Einsatz der erwähnten Reinigungshilfsmittel erfordern sollte.

Nicht nur die von den Tieren stammende Jauche kann in der vorschlagsgemäßen Anordnung im Stall geführt werden: bestimmte Haltungsformen, die im Sinne des Tierwohls besonders vorteilhaft sind und beispielsweise einen "Offenstall" vorsehen, bei welchem etwa 2/3 der Stallfläche nicht überdacht sind, bewirken, dass erhebliche Niederschlagsmengen auf den Stallboden gelangen. Wenn man davon ausgeht, dass bei derartigen Haltungsformen der Stallboden mit Stroh oder einer vergleichbaren Einstreu bedeckt ist, ist es vorteilhaft, die Einstreu im Sinne des Tierwohls möglichst trocken zu halten und sowohl die von den Tieren abgegebenen Flüssigkeiten als auch die Niederschläge möglichst schnell und vollständig vom Stallboden in die Rinne abzuleiten. Dies wird durch die großen Einlauföffnungen unterstützt, da diese die schnelle Aufnahme großer Flüssigkeitsmengen ermöglichen.

Insbesondere wenn die Abzweige einen ähnlichen Durchmesser aufweisen wie die Rohrleitung selbst, wird die Aufnahme großer Flüssigkeitsmengen besonders zuverlässig gewährleistet. Wenn die Durchmesser der Rohrleitung im Bereich von mehr als 60 mm liegen, z. B. im Bereich von 90, 120 oder 160 mm liegen, können die Mündungen der Abzweige jeweils einen ähnlich großen Durchmesser aufweisen.

Die Einlauföffnungen der Abzweige sind jeweils durch eine mit Durchbrüchen versehene Abdeckkappe verschlossen, welche für Flüssigkeit durchlässig, für Feststoffe jedoch weitgehend undurchlässig ist. Entsprechend der Größe der Mündungen betragen auch die Durchmesser der Abdeckkappen wenigstens 30 mm, und vorteilhaft können sie im Bereich von mehr als 60 mm und insbesondere im Bereich von 90, 120 oder 160 mm liegen. Auf diese Weise sind Unfallgefahren für die Tiere auch dann ausgeschlossen, wenn der Durchmesser der Einlauföffnung genauso groß oder größer ist als ein eine Pfote oder ein Huf eines sich im Stall befindlichen Tieres. Vorteilhaft können die Durchbrüche in den Abdeckkappen als Schlitze ausgestaltet sein, so dass die Vorteile einer schmalen Schlitzbreite, welche Feststoffe ab einer bestimmten Größe wirkungsvoll zurückhält, mit den Vorteilen einer großen Öffnungsfläche kombiniert werden, nämlich in Form der Schlitzlänge, welche eine effiziente Einleitung der Flüssigkeit vom Stallboden in den Abzweig ermöglicht. Der große Durchmesser der Einlauföffnungen gewährleistet zudem auch dann, wenn sich Feststoffe auf den Einlauföffnungen befinden, dass die Einlauföffnungen in den seltensten Fällen vollständig abgedeckt sind und vielmehr stets auch dann noch ein Durchbruch einer Abdeckkappe das Einströmen von Flüssigkeit in den Abzweig ermöglicht.

Eine Reinigung der Rohrleitung kann mittels einer Spülung erfolgen, die in der ohnehin vorgesehenen Fließrichtung die Rohrleitung durchströmt. Für die Spülung kann Wasser verwendet werden. Beispielsweise kann die Spülung in Art einer Schwallspülung erfolgen. Zu diesem Zweck kann ein Ende der Rohrleitung mit einem Spültank in Verbindung stehen, so dass bei Bedarf oder in regelmäßigen zeitlichen Abständen die Rohrleitung schwallartig gespült wird und feste Bestandteile der Ausscheidungen oder auch der Einstreu aus der Rohrleitung entfernt werden können. Wenn die angeschlossene Wasserzufuhr selbst eine solche Schwallspülung nicht ermöglicht, kann ein vergleichsweise geringer Wasserstrom pro Zeiteinheit in dem Spültank gesammelt werden, so dass dann später, bei gefülltem Spültank, die gewünschte Schwallspülung impulsartig erfolgen kann. Wenn die angeschlossene Wasserzufuhr jedoch selbst eine solche Schwallspülung ermöglicht, indem sie eine ausreichende Wassermenge innerhalb einer kurzen Zeitspanne liefern kann, kann auf einen Spültank verzichtet werden und die Anordnung dementsprechend besonders wirtschaftlich und platzsparend ausgestaltet werden.

Die Abzweige können vorteilhaft nicht als symmetrisch ausgestaltete T-Stücke ausgestaltet sein, sondern vielmehr jeweils schräg an die Rohrleitung anschließen, beispielsweise in Form eines Rohrbogens. Auf diese Weise wird die in die Rohrleitung einströmende Flüssigkeit bereits im Abzweig in die gewünschte Fließrichtung des Rohres geleitet, nämlich wenn die Abzweige jeweils von oben nach unten durchströmt werden. Auch wenn das Rohr durchspült wird, unabhängig davon, ob dies durch eine Schwallspülung oder durch eine andere Wasserspende erfolgt, ist der schräge Anschluss der Abzweige an die Rohrleitung vorteilhaft: in der umgekehrten Durchströmungsrichtung, nämlich von unten nach oben, verlaufen die Abzweige entgegen der in der Rohrleitung herrschenden Fließrichtung, so dass ein unerwünschter Eintritt des Spülwassers in die Abzweige und insbesondere ein Austritt des Spülwassers aus den Mündungen der Abzweige vermieden werden kann.

Bei der Herstellung des Stallbodens wird die Rohrleitung in die Oberflächenschicht des Stallbodens, beispielsweise eine Betonschicht, eingebettet. Dies ist insofern vorteilhaft, als durch den umgebenden Beton die einzelnen Abschnitte der Rohrleitung optimal gegen Zugkräfte gesichert sind, so dass Undichtigkeiten zuverlässig ausgeschlossen sind, die ansonsten dadurch hervorgerufen werden könnten, dass die Rohrleitung an Trennstellen, an denen benachbarte Elemente der Rohrleitung aneinander stoßen, auseinandergezogen werden könnte. Sowohl durch die Abzweige als auch durch eine Oberflächenprofilierung der Rohrleitung, zum Beispiel in Form von umlaufenden Sicken, wird die Rohrleitung formschlüssig in dem umgebenden Beton fixiert.

Um zu verhindern, dass bei der Herstellung des Stallbodens das fließfähige Material der Oberflächenschicht in die Abzweige und / oder in die Rohrleitung eindringt, können Verschlussstopfen verwendet werden, die dementsprechend dicht an die Mündungen der Abzweige oder an die Enden der Rohrleitung anschließen. Diese Verschlussstopfen werden nach der Aushärtung der Oberflächenschicht entfernt, so dass anschließend die Einlauföffnungen der Abzweige flüssigkeitsdurchlässig abgedeckt werden können, beispielsweise mittels der oben erwähnten geschlitzten Abdeckkappen. Beispielsweise können die Verschlussstopfen aus einem Schaumwerkstoff bestehen, so dass sie einerseits eine ausreichende Formstabilität aufweisen, um bei der Herstellung des Stallbodens nicht durch das Material der Oberflächenschicht des Stallbodens unerwünscht verformt zu werden, so dass sie andererseits jedoch bei ausreichendem Druck komprimiert und in die Einlauföffnungen der Abzweige eingepresst werden können, um klemmend in dem Abzweig gehalten zu werden. Alternativ können die Verschlussstopfen jeweils einen Stutzen aufweisen, der sich in den Abzweig erstreckt, und der durch Rippen, Noppen oder ähnliche Vorsprünge ebenfalls einen Klemmsitz des Verschlussstopfens in dem Abzweig bewirkt. Ein Klemmsitz stellt sicher, dass die Verschlussstopfen später rückstandfrei aus den Einlauföffnungen entfernt werden können. Da keine Rückstände im Bereich der Einlauföffnungen verbleiben, können die Abdeckkappen problemlos montiert werden.

Die Verschlussstopfen können vorteilhaft jeweils radial über die Mündung der Abzweige hinausragen und einen schräg verlaufenden, umlaufenden Rand aufweisen, so dass sie im Bereich dieses radialen Überstandes, nachdem sie von dem Abzweig entfernt worden sind, eine Einführschräge im Stallbodens schaffen, welche die Flüssigkeit in die Einlauföffnung des Abzweigs führt.

Die Einführschräge stellt weiterhin eine Fase im Stallboden dar, beispielsweise eine 45°-Fase, so dass scharfwinklige Übergänge vom Stallboden zu den Mündungen der Abzweige vermieden wird. Wenn der Stallboden von schweren Fahrzeugen befahren wird oder ein Reinigungsgerät, z.B. in Form eines Kratzschildes oder dergleichen, über den Stallboden geführt wird, sind die Kanten im Stallboden im Bereich der erwähnten Übergänge aufgrund der geschaffenen Fasen vor Abplatzern, Ausbrüchen oder ähnlichen Schäden geschützt.

Die Einführschräge stellt außerdem sicher, dass die Mündung des Abzweigs - und damit auch die Abdeckkappe - tiefer liegt als die Oberfläche des Stallbodens. Die Abdeckkappe ist dadurch vor einer mechanischen Beanspruchung durch Reinigungsgeräte, die über den Stallboden bewegt werden, ebenso geschützt wie vor einer Druckbelastung durch schwere Fahrzeuge, da diese entsprechend breite Reifen oder Laufketten aufweisen, die insbesondere von dem Stallboden getragen werden, welcher die Mündung des Abzweigs und somit die Abdeckkappe umgibt. Durch die Druckentlastung wird nicht nur die Abdecckappe selbst geschützt, sondern es wird auch verhindert, dass die Abdeckkappe einen Druck weiter nach unten übertragen kann, so dass der unterhalb der Abdeckkappe befindliche Abzweig und auch der Bereich der Rohrleitung, welche sich unterhalb des Abzweigs befindet, geschützt werden.

Dadurch, dass die Abdeckkappen aufgrund der Einführschrägen tiefer liegen als die Oberfläche des Stallbodens, sind sie für die Tiere nicht zugänglich. Die Tiere können daher die Abdeckkappen weder entfernen noch beschädigen.

Aus der Praxis ist es bekannt, dass die sogenannten 90°-Abzweige eine Mündung aufweisen, die tatsächlich nicht in einem Winkel von 90° zur Längsachse des Rohres ausgerichtet ist, sondern vielmehr in einem Winkel von 87°. Die Verschlussstopfen können daher vorteilhaft nicht rotationssymmetrisch ausgestaltet sein, sondern vielmehr zum Ausgleich dieser 3°-Schräge in der Art ausgestaltet sein, dass ihre Oberseite horizontal ausgerichtet ist, wenn die Verschlussstopfen in die Mündungen der Abzweige eingesetzt bzw. auf die Mündungen aufgesetzt sind. Durch diese horizontale Ausrichtung der Oberseite wird vermieden, dass bei der Herstellung des Stallbodens ein unerwünschter, schräg nach oben über die Bodenoberfläche ragender Anteil der Verschlusskappe hinderlich im Wege ist, und weiterhin kann eine gleichmäßige Ausgestaltung der ggf. vorgesehenen Einführungsschräge gewährleistet werden. Um die korrekte Ausrichtung der Verschlusskappe auf der Mündung des Abzweigs zu erleichtern, kann auf der Oberseite der Verschlusskappe eine Markierung vorgesehen sein, beispielsweise ein in der vorgesehenen Fließrichtung der Rohrleitung weisender Pfeil.

Die Abzweige können einen Rohrleitungsabschnitt aufweisen, der es ermöglicht, beiderseits ein Rohrstück der Rohrleitung an den Abzweig anzuschließen. Erstens wird auf diese Weise ein Abzweig geschaffen, der einteilig und dementsprechend zuverlässig dicht ausgestaltet ist, indem nämlich der Abzweig selbst einerseits einen aufwärts gerichteten, bis zur Einlauföffnung verlaufenden Teil sowie andererseits einen liegend ausgerichteten Teil aufweist, der einen Teil der Rohrleitung bildet und daher als Rohrleitungsabschnitt bezeichnet ist. Zweitens wird durch diese Ausgestaltung der Abzweige eine schnelle und unkomplizierte Herstellung der Rinne ermöglicht, indem einerseits geradlinige oder gebogene Rohrstücke, je nach dem gewünschten Verlauf der Rohrleitung, verwendet werden und andererseits die Abzweige als Verbindungselemente jeweils dazu dienen, zwei benachbarte Rohrstücke miteinander zu verbinden und dazwischen eine Einlauföffnungen bereitzustellen, durch welche Flüssigkeit vom Stallboden in die Rohrleitung gelangen kann. Das Einbringen von Bohrungen in die Rohrleitung, um Abzweige an die Rohrleitung anzuschließen, wird auf diese Weise ebenso vermieden wie eventuelle Undichtigkeiten in dem Bereich, wo ein Abzweig an die Rohrleitung anschließt.

Der Rohrleitungsabschnitt eines Abzweigs kann als Doppelmuffe ausgestaltet sein, so dass beiderseits an einen Abzweig weitere Rohrleitungsabschnitte anschließen können, die sehr einfach und preisgünstig ausgestaltet sein können, beispielsweise als Rohrstücke, die kein Muffenende aufweisen müssen. Dementsprechend können derartige Rohrstücke wirtschaftlich dadurch hergestellt werden, dass sie aus einem endlos extrudierten Rohrmaterial passend abgelängt werden. Somit können die Rohrstücke einerseits in bestimmten Standardlängen bereitgestellt werden, es kann jedoch auch mit minimalem Aufwand eine individuelle Anpassung der jeweiligen Anordnung dadurch erreicht werden, dass die Rohrstücke entweder auf der Baustelle auf das gewünschte Maß gekürzt werden oder bereits bei der Herstellung in dem gewünschten Maß erzeugt werden, so dass ökologisch und ökonomisch vorteilhaft Verschnitt vermieden werden kann. Die Herstellung von Rohrverbindungen mittels Muffen ist eine standardisierte und bewährte Technologie, die zuverlässig die gewünschte Dichtheit der Rohrleitung gewährleistet. Insbesondere wenn Dichtungsringe im Bereich der Muffen verwendete werden, kann eine dichte Rohrverbindung geschaffen werden, ohne an der Baustelle die Handhabung von Klebstoffen oder dergleichen zu erfordern.

Die Abzweige können jeweils ein umlaufendes Dichtungselement aufweisen, beispielsweise einen Dichtungsring in Form einer Elastomerdichtung, einer Quellschnur oder eines Quellbandes, oder dergleichen. Davon ausgehend, dass bei der Herstellung der Anordnung die Rinne, nämlich die Rohrleitung und die Abzweige, in ein fließfähiges Material eingebettet werden, welches die Oberfläche des Stallbodens bildet, z.B. in Beton, kann beim Abbinden, Aushärten oder einer ähnlichen Verfestigung dieses fließfähigen Materials ein Volumenschwund des Materials auftreten. Dementsprechend schließt später der Stallboden, wenn sich nämlich das Material im festen Zustand befindet, möglicherweise nicht spaltfrei an die Abzweige an. Um ein unerwünschtes Einsickern von Flüssigkeit in den Stallboden zu verhindern, dient der erwähnte Dichtungsring, der um den Abzweig herum verläuft, als Flüssigkeitssperre.

Ein Dichtungsring, der als Elastomerdichtung ausgestaltet ist, wird vom Material, welches den Stallboden bilden soll, zunächst komprimiert oder anderweitig verformt. Wenn das Material anschließend schrumpft, bewirken die Rückstellkräfte der Elastomerdichtung, dass der Dichtungsring nach wie vor dicht an das den Abzweig umgebende Material des Stallbodens anschließt. Wenn der Dichtungsring als Quellschnur oder Quellband ausgestaltet ist, bewirkt entweder die Feuchtigkeit des fließfähigen Materials bei der Herstellung des Stallbodens oder spätestens die in den erwähnten Spalt einsickernde Flüssigkeit nach der Inbetriebnahme des Stalls, dass der Dichtungsring aufquillt, sein Volumen vergrößert und somit im Sinne einer Flüssigkeitssperre dicht an das den Abzweig umgebende Material des Stallbodens anschließt.

Je nach Ausgestaltung des Stalls und den betrieblichen Anforderungen können die Durchmesser der Rohrleitung sowie der Abstand der Abzweige zueinander variieren, wobei in wirtschaftlich vorteilhafter Weise Rohrstücke und Abzweige aus einem handelsüblichen Rohrleitungsprogramm verwendet werden können, wie es beispielsweise für Kanalrohre verwendet wird.

Die Erfindung betrifft erstens eine Anordnung zum Abführen von Jauche aus einem Stall. Die Anordnung enthält erstens die Rohrleitung, bestehend aus mehreren Rohrleitungsabschnitten, die teils als einfache Rohrstücke und teils als Bestandteil eines als "Abzweig" bekannten Elements ausgestaltet sein können. Die Anordnung enthält zweitens die von der Rohrleitung nach oben ragenden Abzweige, die zu einer oberen, im Bereich der Stallbodenoberfläche befindlichen Einlauföffnung führen. Die Einlauföffnung liegt auf Höhe der Stallbodenoberfläche oder darunter, nicht jedoch höher als die Stallbodenoberfläche. Schließlich weist die Anordnung auch noch mit Durchbrüchen versehene Abdeckkappen auf, welche es ermöglichen, dass Flüssigkeit von dem Stallboden in die Abzweige und weiter in die Rohrleitung fließen kann.

Die Anordnung kann in Rinnen verlegt werden, die im Stallboden vorgesehen sind und anschließend bis auf die Einlauföffnungen abgedeckt werden. Auf diese Weise ist eine problemlose Revisionsmöglichkeit der Anordnung gewährleistet.

Alternativ kann die Anordnung als integraler Bestandteil des Stallbodens ausgestaltet werden, indem sie in ein fließfähiges Material eingebettet wird, welches die obere Schicht des Stallbodens und somit auch die Stallbodenoberfläche bildet.

Die Anordnung kann um weitere Komponenten erweitert werden, beispielsweise um einen Spülanschluss, der dazu dient, Spülwasser in die Rohrleitung einzuleiten. Der Spülanschluss kann an eine Wasserleitung angeschlossen sein oder an einen Spültank, welcher dazu dient, eine größere Wassermenge zu bevorraten und eine impulsartige Schwallspülung zu ermöglichen.

Die Erfindung betrifft weiterhin einen Bausatz, der dazu dient, die oben erwähnte Anordnung zu schaffen. Der Bausatz enthält Rohrleitungsabschnitte, Abzweige und Abdeckkappen, gegebenenfalls auch die genannten Verschlussstopfen. Unter Verwendung eines solchen Bausatzes können für die Installation der Anordnung zunächst die Rohrstücke, Rohrleitungsabschnitte und die Abzweige montiert werden und dabei die Mündungen der Abzweige gegebenenfalls mit den Verschlussstopfen gegen eindringende Verschmutzungen geschützt werden. Nach Fertigstellung der Installation bzw. Fertigstellung der Oberflächenschicht des Stallbodens können die Abdeckkappen montiert, gegebenenfalls die Verschlussstopfen entfernt und durch die Abdecckappen ersetzt werden, so dass die Anordnung nun betriebsbereit ist. Wie für die Anordnung erwähnt, kann auch der Bausatz weitere Komponenten enthalten wie z.B. den oben erwähnten Spülanschluss.

Insbesondere wenn Bestandteile der Anordnung - wie die Rohrleitungen, Abzweige, Abdeckkappen und Verschlussstopfen - als Bausatz versandt werden, kann der Verzicht auf einen Spültank das Transportvolumen des Bausatzes vorteilhaft gering halten. Zugunsten eines geringen Transportvolumens kann vorgesehen sein, dass selbst in Fällen, in denen ein Spültank einen Teil der Anordnung bilden soll, der Spültank nicht Teil des Bausatzes ist, sondern vielmehr an der Baustelle, wo die Anordnung errichtet werden soll, bereitgestellt wird. In vielen Fällen können Behälter als Spültank genutzt werden, die im Bereich des Stalls ohnehin bereits verfügbar sind, wie z. B. leere IBC-Container, leere Fässer oder dergleichen.

Ein Ausführungsbeispiel der Erfindung wird anhand der rein schematischen Darstellungen nachfolgend näher erläutert. Dabei zeigt
- Fig. 1: einen Vertikalschnitt durch eine Anordnung zum Abführen von Jauche in einem Stall,
- Fig. 2: ein Detail von Fig. 1 während der Installation der Anordnung,
- Fig. 3: das Detail von Fig. 1 nach der Installation, bei betriebsbereiter Anordnung,
- Fig. 4: eine perspektivische Ansicht auf den Bereich der Mündung eines Abzweigs während der Installation, und
- Fig. 5: eine perspektivische Ansicht auf den Bereich der Mündung eines Abzweigs einer betriebsbereiten Anordnung.

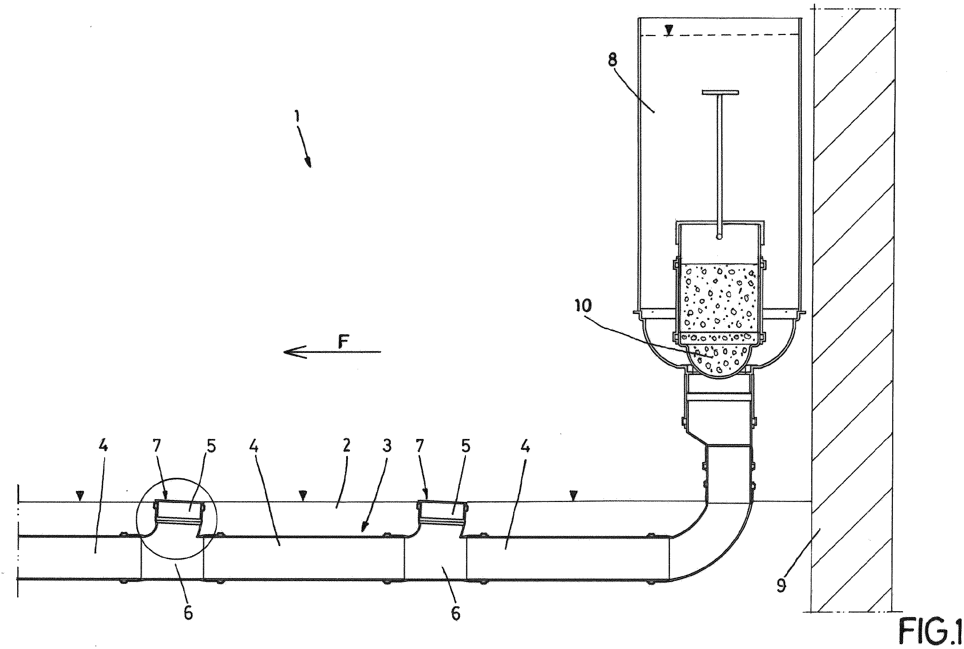

In Fig. 1 ist mit 1 insgesamt eine Anordnung bezeichnet, die zum Abführen von Jauche in einem Stall dient. Dabei ist die Oberfläche eines Stallbodens 2 mit Dreiecken gekennzeichnet. Im Stallbodens 2 verläuft eine Rohrleitung 3, die mehrere muffenlose Rohrstücke 4 aufweist, von denen jeweils zwei benachbarte Rohrstücke 4 durch einen Abzweig 5 miteinander verbunden sind. Der Abzweig 5 weist dazu einen Rohrleitungsabschnitt 6 auf, der als Doppelmuffe ausgestaltet ist. Von diesem Rohrleitungsabschnitt 6 aus erstreckt sich der Abzweig 5 nach oben zu einer Mündung 7, die sich knapp unterhalb der Oberfläche des Stallbodens 2 befindet.

Aufgrund der rein schematischen Darstellung ist die Oberfläche des Stallbodens 2 horizontal dargestellt. Abweichend von dem dargestellten Ausführungsbeispiel kann vorgesehen sein, zwischen zwei benachbarten Mündungen 7 jeweils zwei Bereiche im Stallboden 2 zu schaffen, an denen die Oberfläche jeweils ein Gefälle aufweist, welches auf dem Stallboden 2 befindliche Flüssigkeit zu den jeweiligen Mündungen 7 führt. Außerdem können die Mündungen 7 entlang einer Art Rinne liegen, die im Stallboden 2 geschaffen ist, und von der zu beiden Seiten hin, bezogen auf Fig. 1 also vor und hinter der Zeichenebene, der Stallboden 2 ansteigt, so dass auf dem Stallboden 2 befindliche Feuchtigkeit in diese Rinne fließt und dort in die Mündungen 7 gelangt.

Die Rohrleitung 3 weist eine vorgesehene Fließrichtung auf, die bei dem dargestellten Ausführungsbeispiel von rechts nach links verläuft und durch einen mit F gekennzeichneten Pfeil verdeutlicht ist. Um die Rohrleitung 3 in Fließrichtung F durchspülen zu können, ist an das rechte Ende der Rohrleitung 3 ein Spültank 8 angeschlossen, der an einer Stallwand 9 montiert ist. Auch der Wasserpegel innerhalb des Spültanks 8 ist in Fig. 1 durch ein Dreieck markiert. Der Spültank 8 ist an eine nicht dargestellte Wasserleitung angeschlossen, die einen vergleichsweise geringen Wasserstrom - Wassermenge pro Zeiteinheit - ermöglicht. Dadurch, dass das aus der Wasserleitung gelangende Wasser im Spültank 8 gesammelt wird, kann eine impulsartige Schwallspülung der Rohrleitung 3 ermöglicht werden, wenn ein Stopfen 10 im Spültank 8 geöffnet wird und anschließend der gesamte Wasserinhalt des Spültanks 8 innerhalb kurzer Zeit durch die Rohrleitung 3 strömt.

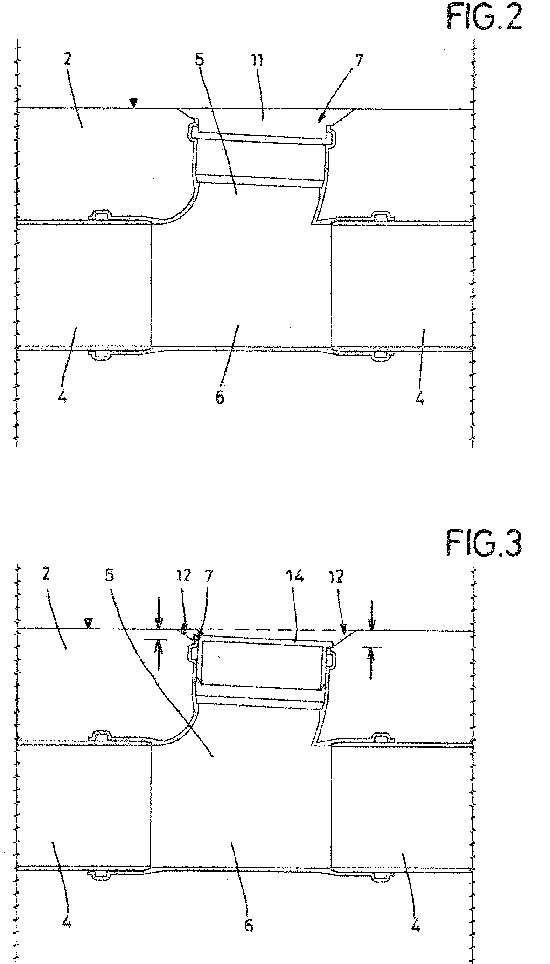

In Fig. 2 ist das in Fig. 1 mit einem Kreis markierte Detail in einem größeren Maßstab als in Fig. 1 dargestellt. Fig. 2 zeigt dieses Detail während der Installation der Anordnung 1. Die Mündung 7 des Abzweigs 5 ist durch einen Verschlussstopfen 11 abgedeckt, der sich von der Mündung 7 aus trichterartig nach oben erweitert. Insbesondere ist aus Fig. 2 ersichtlich, dass die Mündung 7 nicht exakt parallel zur Oberfläche des Stallbodens 2 verläuft, sondern in einem Winkel dazu steht. Beispielsweise kann der Abstand der Mündung zur vorgesehenen Oberfläche des Stallbodens 2 in Fließrichtung zunächst etwa 10 mm betragen, also auf der rechten Seite der Mündung 7 in Fig. 2, während dieser Abstand in Fließrichtung weiter hinten, also auf der linken Seite der Mündung 7 in Fig. 2, lediglich etwa 5 mm betragen kann. Der Verschlussstopfen 11 ist nicht rotationssymmetrisch ausgestaltet, so dass er diesen Winkel und die daraus resultierenden unterschiedlichen Abstände der Mündung 7 zur Oberfläche des Stallbodens 2 ausgleichen und eine horizontale Ausrichtung der Oberfläche des Verschlussstopfens 11 ermöglichen kann.

Der Stallboden 2 wird fertiggestellt, indem auf einer unteren Tragschicht zunächst die Rohrleitung 3 mitsamt den Abzweigen 5 und den Verschlussstopfen 11 installiert und in der gewünschten Ausrichtung fixiert wird. Die Oberseite der Verschlussstopfen 11 befindet sich dabei auf der Höhe, in der später die Oberfläche des Stallbodens 2 vorgesehen ist. Anschließend wird ein fließfähiges Material, beispielsweise Beton, auf die Tragschicht gegossen und die Rohrleitung 3 mitsamt den Abzweigen 5 und den Verschlussstopfen 11 in das Material eingebettet, welches dann ausgehärtet, z. B. abgebunden wird.

Nachdem der Stallboden 2 fertiggestellt worden ist, wird der Verschlussstopfen 11 entnommen. Beispielsweise kann der Verschlussstopfen 11 aus einem leicht zerstörbaren Material bestehen, z.B. aus einem Schaumwerkstoff wie beispielsweise geschäumtem Polystyrol. Auf diese Weise kann auch ohne eine nach oben, über die Oberfläche des Stallbodens 2 überstehende Handhabe, an welcher der Verschlussstopfen 11 angehoben werden könnte, der Verschlussstopfen 11 problemlos nach Fertigstellung des Stallbodens 2 von der Mündung 7 des Abzweigs 5 entfernt werden. Der Verzicht auf die erwähnte Handhabe erleichtert die Herstellung einer möglichst planen Stallbodenoberfläche.

Fig. 3 zeigt die Situation desselben Details wie Fig. 2, allerdings nachdem der Verschlussstopfen 11 entfernt worden ist: das obere Ende des Abzweigs 5 bildet nun eine Einlauföffnung, und die trichterartige Erweiterung des Verschlussstopfens 11 hat eine Einführschräge 12 im Stallboden 2 geschaffen, die ringförmig um die Einlauföffnung verläuft. Eine Abdeckkappe 14 ist in die Mündung 7 des Abzweigs 5 eingesetzt worden. Es handelt sich dabei um ein seriennahes Bauteil, welches ähnlich wie eine handelsübliche Rohrkappe ausgestaltet ist, jedoch Schlitze aufweist, welche feste Bestandteile wie z.B. Einstreu oder Kot weitestgehend zurückhalten, Flüssigkeiten wie z.B. Jauche jedoch in den Abzweig 5 gelangen lässt.

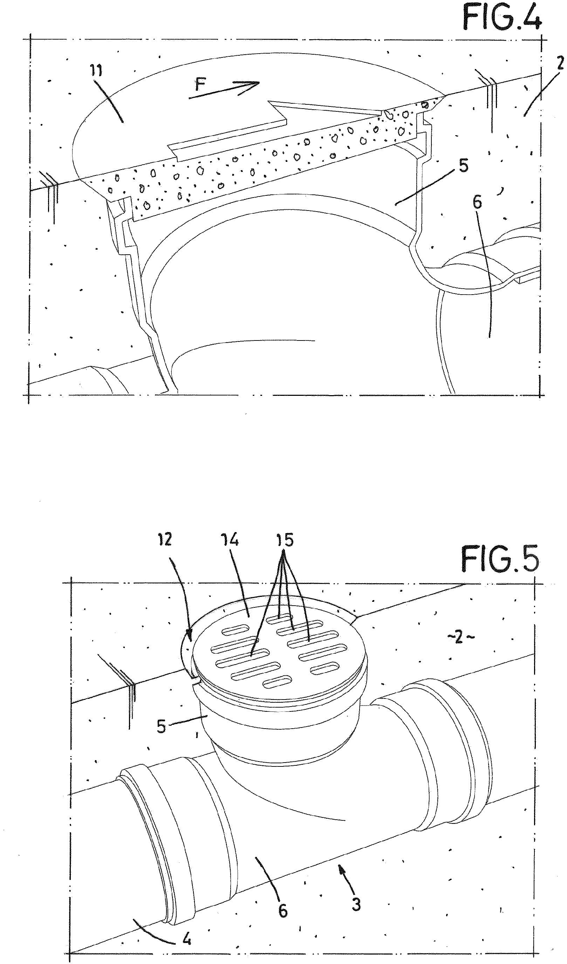

Fig. 4 zeigt eine perspektivische Ansicht auf die Situation von Fig. 2, allerdings aus einer anderen Blickrichtung, wobei der Abzweig 5 schräg nach links oben an die Rohrleitung 3 anschließt, während die Abzweige 5 in den Fig. 1 bis 3 jeweils schräg nach rechts oben an die Rohrleitung 3 anschließen. Es ist in Fig. 4 ersichtlich, dass der Verschlussstopfen 11 bündig mit der umgebenden Oberfläche des Stallbodens 2 abschließt, und das in der Oberseite des Verschlussstopfens 11 eine Markierung in Form eines eingeprägten Pfeils vorgesehen ist, welche in die Fließrichtung F weist.

Fig. 5 zeigt in einer ähnlichen perspektivischen Ansicht wie Fig. 4 die Situation von Fig. 3, nämlich nach Fertigstellung der Anordnung 1. Flüssigkeit gelangt zunächst durch die Einführschräge 12 von der Oberfläche des Stallbodens 2 auf die Abdeckkappe 14. Schlitze 15 in der Abdeckkappe 14 ermöglichen, dass die Flüssigkeit dann weiter, nämlich in den Abzweig 5 und somit in die Rohrleitung 3 fließen kann.

### Bezugszeichen:

- 1: Anordnung
- 2: Stallboden
- 3: Rohrleitung
- 4: Rohrstück
- 5: Abzweig
- 6: Rohrleitungsabschnitt
- 7: Mündung
- 8: Spültank
- 9: Stallwand
- 10: Stopfen
- 11: Verschlussstopfen
- 12: Einführschräge
- 14: Abdeckkappe
- 15: Schlitze
- F: Fließrichtung

## Patentansprüche

1. Anordnung (1), die dazu bestimmt ist, Jauche in einem Stall abzuführen,
mit einer im Stallboden (2) verlaufenden Rinne, die zur Aufnahme der Jauche bestimmt ist und eine vorbestimmte Fließrichtung (F) in der Art aufweist, dass die Jauche zu einer vorbestimmten Stelle führbar ist,
wobei die an die Rinne grenzende Stallbodenoberfläche ein Gefälle zur Rinne hin aufweist,
**dadurch gekennzeichnet,**
**dass** die Rinne eine Rohrleitung (3) mit mehreren in die Rohrleitung (3) eingesetzten Abzweigen (5) aufweist, wobei sich die Abzweige (5) von der Rohrleitung (3) aus nach oben erstrecken und mit ihrer Mündung (7) jeweils eine Einlauföffnung der Rinne schaffen, die auf Höhe der Stallbodenoberfläche oder darunter angeordnet und dazu bestimmt ist, auf dem Stallboden (2) befindliche Flüssigkeit in die Rinne einströmen zu lassen,
wobei die Mündungen (7) der Abzweige (5) jeweils einen Durchmesser von 30 mm oder mehr aufweisen und jeweils durch eine mit Durchbrüchen versehene Abdeckkappe (14) verschlossen sind, welche für Flüssigkeit durchlässig ist.

2. Anordnung nach Anspruch 1,
**dadurch gekennzeichnet,**
**dass** die Durchbrüche als Schlitze (15) ausgestaltet sind.

3. Anordnung nach Anspruch 1 oder 2,
**gekennzeichnet durch**
einen Spülanschluss, der dazu bestimmt ist, Spülwasser in die Rohrleitung (3) in der Art einzuleiten, dass die Spülung die Rohrleitung (3) in der ohnehin vorgesehenen Fließrichtung (F) durchströmt.

4. Anordnung nach Anspruch 3,
**dadurch gekennzeichnet,**
**dass** ein Ende der Rohrleitung (3) mit einem Spültank (8) in Verbindung steht.

5. Anordnung nach einem der vorhergehenden Ansprüche,
**dadurch gekennzeichnet,**
**dass** die Abzweige (5) unsymmetrisch ausgestaltet sind und jeweils schräg in der Art an die Rohrleitung (3) anschließen, dass die Abzweige (5) entgegen der Fließrichtung (F) der Rohrleitung (3) aufwärts zu ihrer Mündung (7) verlaufen.

6. Anordnung nach einem der vorhergehenden Ansprüche,
**dadurch gekennzeichnet,**
**dass** an die Mündungen (7) angrenzend im Stallboden (2) jeweils eine Einführschräge (12) angeordnet ist, die dazu bestimmt ist, die auf dem Stallboden (2) befindliche Flüssigkeit in die Mündung (7) des Abzweigs (5) zu führen.

7. Bausatz zur Schaffung einer Anordnung (1) nach einem der vorhergehenden Ansprüche,
mit mehreren Rohrstücken (4),
mehreren Abzweigen (5), die jeweils als Einlauföffnung eine Mündung (7) mit einem Durchmesser von wenigstens 30 mm aufweisen,
wobei die Abzweige (5) und die Rohrstücke (4) dazu bestimmt sind, miteinander verbunden zu werden und eine Rohrleitung (3) mit mehreren Einlauföffnungen in einem Stallboden (2) zu schaffen,
und mit Abdeckkappen (14), die jeweils mit Durchbrüchen versehen und dazu bestimmt sind, die Einlauföffnungen der Abzweige (5) für Flüssigkeit durchlässig zu verschließen.

8. Bausatz nach Anspruch 7,
**dadurch gekennzeichnet,**
**dass** die Durchbrüche jeweils in Form von Schlitzen (15) ausgestaltet sind.

9. Bausatz nach Anspruch 7 oder 8,
**gekennzeichnet durch**
einen an die Rohrleitung (3) anschließbaren Spültank (8).

10. Bausatz nach einem der Ansprüche 7 bis 9,
**gekennzeichnet durch**
unsymmetrisch ausgestaltete, schräg an die Rohrleitung (3) anschließbare Abzweige (5).

11. Bausatz nach Anspruch 10,
**dadurch gekennzeichnet,**
**dass** die Abzweige (5) jeweils einen Rohrbogen aufweisen.

12. Bausatz nach einem der Ansprüche 7 bis 11,
**dadurch gekennzeichnet,**
**dass** die Abzweige (5) jeweils ein umlaufendes Dichtungselement aufweisen.

13. Bausatz nach einem der Ansprüche 7 bis 12,
**gekennzeichnet durch**
Verschlussstopfen (11), die dazu bestimmt sind, die Mündungen (7) der Abzweige (5) bei der Herstellung des Stallbodens zu verschließen, und die aus den Mündungen (7) entfernbar sind.

14. Bausatz nach Anspruch 13,
**dadurch gekennzeichnet,**
**dass** die Verschlussstopfen (11) derart ausgestaltet sind, dass sie jeweils radial und schräg nach oben über die Mündung (7) der Abzweigung (5) hinausragen, derart, dass sie nach ihrer jeweiligen Entfernung von dem Abzweig (5) eine die auf dem Stallboden (2) befindliche Flüssigkeit in die Mündung (7) führende Einführschräge (12) im Stallboden (2) schaffen.

15. Bausatz nach Anspruch 13 oder 14,
**dadurch gekennzeichnet,**
**dass** die Verschlussstopfen (11) rotations-asymmetrisch in der Art ausgestaltet sind, dass ihre Oberseite horizontal ausgerichtet ist, wenn die Verschlussstopfen (11) in schräg zur Horizontalen ausgerichtete Mündungen (7) der Abzweige (5) eingesetzt sind.

16. Bausatz nach einem der Ansprüche 7 bis 15,
**dadurch gekennzeichnet,**
**dass** die Abzweige (5) jeweils einen Rohrleitungsabschnitt (6) aufweisen, der dazu bestimmt ist, beiderseits an ein Rohrstück (4) der Rohrleitung (3) angeschlossen zu werden.

17. Bausatz nach Anspruch 16,
**dadurch gekennzeichnet,**
**dass** der Rohrleitungsabschnitt (6) als Doppelmuffe ausgestaltet ist.

18. Bausatz nach Anspruch 17,
**dadurch gekennzeichnet,**
**dass** die Rohrstücke (4) jeweils an ihren beiden Enden muffenlos ausgestaltet sind.
